# EUROPEAN PATENT SPECIFICATION

(11) **EP 2 490 463 B1**
(45) Date of publication and mention of the grant of the patent: **16.12.2015**
(21) Application number: 12001011.1
(22) Date of filing: 16.02.2012
(51) Int. Cl.: H04W 4/00

(54) **Service networks and methods for handling machine type communication device triggering**
Dienstnetzwerke und Verfahren zur Handhabung der Auslösung von maschinenähnlichen Kommunikationsvorrichtungen
Réseaux de service et procédés pour la manipulation de déclenchement de dispositif de communication de type machine

(30) Priority: 16.02.2011 US 201161443635 P
(43) Date of publication of application: 22.08.2012
(73) Proprietor: HTC Corporation, Taoyuan City 330 (TW)
(72) Inventor: Liao, Ching-Yu, Taoyuan City Taoyuan 330 (TW)
(74) Representative: Klang, Alexander H.

(56) References cited:
- HTC: "Evaluation of MTC Device triggering", 3GPP DRAFT; S2-110732-PCR-DEVICETRIGGERING-V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Salt Lake City; 20110221, 15 February 2011 (2011-02-15), XP050523909, [retrieved on 2011-02-15]
- "3rd Generation Partnership Project; Technical Specification Group Services and System Aspects; System Improvements for Machine-Type Communications; (Release 10)", 3GPP STANDARD; 3GPP TR 23.888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 22 September 2010 (2010-09-22) , pages 1-80, XP050442131, [retrieved on 2010-09-22]
- "3rd Generation Partnership Project; Technical Specification Group Services and System Aspects; Service requirements for Machine-Type Communications (MTC); Stage 1 (Release 11)", 3GPP STANDARD; 3GPP TS 22.368, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V11.0.1, 11 February 2011 (2011-02-11) , pages 1-23, XP050476264, [retrieved on 2011-02-11]

## Description

### BACKGROUND OF THE INVENTION

### Field of the Invention

The invention generally relates to Machine Type Communication (MTC) device triggering, and more particularly, to service networks and methods for MTC device triggering via a trigger indication.

### Description of the Related Art

For a long time, various machines have been provided to make our lives more convenient in every way. Generally, machines, nowadays, are equipped with computing processors and software to accommodate us with more intelligence-based services. With the advancement of wireless communications, Machine Type Communication (MTC) has been developed to enable communications between remote machines for exchanging information and operating without human interaction. Especially for critical public infrastructures, such as water treatment facilities or bridges, MTC sensors may be employed to monitor the operation statuses of facilities and report measurement results back to control centers via wireless communication networks, such as the Global System for Mobile communications (GSM) technology, General Packet Radio Service (GPRS) technology, Enhanced Data rates for Global Evolution (EDGE) technology, Wideband Code Division Multiple Access (WCDMA) technology, High Speed Packet Access (HSPA) technology, Code Division Multiple Access 2000 (CDMA-2000) technology, Time Division-Synchronous Code Division Multiple Access (TD-SCDMA) technology, Worldwide Interoperability for Microwave Access (WiMAX) technology, Long Term Evolution (LTE) technology, LTE-Advanced technology, and others.

Take the LTE technology in compliance with the 3GPP TR 23.888 specification, v1.0.0 (referred to herein as the TR 23.888 specification) and the 3GPP TS 24.368 specification, v11.0.1 (referred to herein as the TS 24.368 specification) as an example. When an MTC server wishes to trigger specific MTC device(s), it may transmit a trigger notification to the service network and it is required that the service network shall be able to trigger the MTC device(s) via a trigger indication, so as to initiate communication between the MTC device(s) and the MTC server. However, it is not specified how the trigger indication shall be delivered from the service network to the MTC device(s), and there is no trigger information specified in the trigger indication. Without specific trigger information and a specific way of delivery, the MTC device(s) may not be triggered successfully.

HTC: "Evaluation of MTC Device triggering", 3GPP DRAFT; S2-110732-PCR-DEVICETRIGGERING-V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, SA WG2, Salt Lake City, Utah, USA; 15 February 2011 discloses certain aspects of MTC device triggering and was used as a basis for the preamble of the independent claims.

### SUMMARY OF THE INVENTION

In a first aspect of the invention, a method for handling MTC device triggering by a service network connected to an MTC server and at least one MTC device is provided as set forth in claim 1. Preferred embodiments of the present invention may be gathered from the dependent claims.

Other aspects and features of the present invention will become apparent to those with ordinarily skill in the art upon review of the following descriptions of specific embodiments of service networks and methods for handling MTC device triggering.

### BRIEF DESCRIPTION OF DRAWINGS

The invention can be more fully understood by reading the subsequent detailed description and examples with references made to the accompanying drawings, wherein:
Fig. 1 is a block diagram illustrating a mobile communication environment according to an embodiment of the invention;
Fig. 2 is a message sequence chart illustrating the MTC device triggering via a trigger indication with trigger information according to an embodiment of the invention;
Fig. 3 is a message sequence chart illustrating the MTC device triggering via a trigger indication with trigger information according to another embodiment of the invention;
Fig. 4 is a flow chart illustrating the method for handling MTC device triggering according to an embodiment of the invention; and
Fig. 5 is a flow chart illustrating the method for handling MTC device triggering according to another embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. Note that the 3GPP specifications described herein are used to teach an appropriate context of the invention, and the invention is not limited thereto.

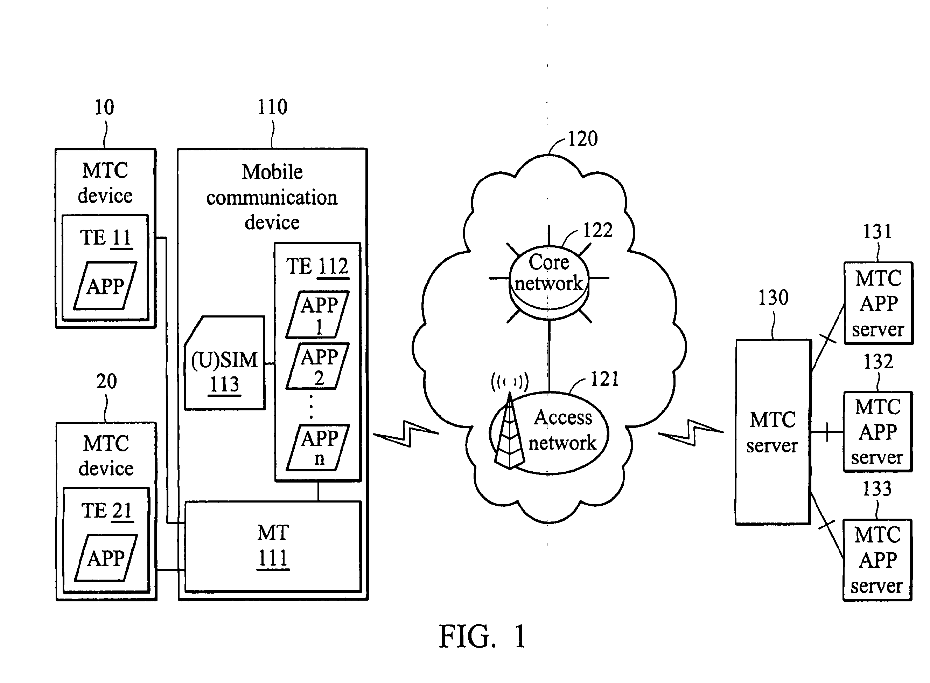

In order to solve the aforementioned problems, the invention provides methods for handling MTC device triggering via service network. Fig. 1 is a block diagram illustrating a mobile communication environment according to an embodiment of the invention. In the mobile communication environment 100, the mobile communication device 110 is configured for MTC and runs an application for MTC. Also, there may be one or more MTC devices, such as the MTC devices 10 and 20, which run MTC applications and are connected to the mobile communication device 110 wirelessly or through wires. For example, the mobile communication device 110 may be a Mobile Station (MS)/User Equipment (UE) which contains a Mobile Terminal (MT) 111, a Terminal Equipment (TE) 112, and a Subscriber Identity Module (SIM) or Universal SIM (USIM) 113. The MT 111 holds all the necessary radio functions to access the service network 120 and the TE 112 provides a service platform for applications. The MTC devices 10 and 20 may contain TEs 11 and 12, respectively, which is connected to the mobile communication device 110, and may request the MT 111 of the mobile communication device 110 for wireless connection to the service network 120 if needed. That is, all of the mobile communication device 110 and the MTC devices 10 and 20 are equipped with TEs for executing applications. The mobile communication device 110 may communicate with the MTC server 130 via the service network 120 which may be a 3GPP network, e.g. Global System for Mobile Communication (GSM) network, Universal Mobile Telecommunications System (UMTS) network, or Evolved Packet System (EPS) network. The MTC server 130 may be a server capable of triggering MTC applications (also called MTC services) on the mobile communication device 110 or the MTC device 10 or 20, which is further connected to the MTC application server 131 to 133 via certain Application Programming Interfaces (API) and provides triggering services via the service network 120 for the connected MTC application servers 131 to 133. Specifically, in request of any of the connected MTC application servers 131 to 133, the MTC server 130 can send trigger message via the service network 120 to the mobile communication device 110 which is an MS/UE configured for MTC or trigger one or more of the MTC devices 10 and 20 connected to mobile communication device 110, for executing specific MTC application(s).

The service network 120 may comprise an access network (also called radio access network) 121 and a core network 122, wherein the access network 121 allows connectivity between the mobile communication device 110 and the core network 122 by providing the functionality of wireless transmissions and receptions to and from the mobile communication device 110 for the core network 122, and the core network 122 signals the required operation to the access network 121 for providing wireless services to the mobile communication device 110. Further, the core network 122 may provide different interfaces to the MTC server 130. The MTC server 130 may transmit trigger message directly to the service network 120 via SMS or indirectly to an interworking function, e.g. a gateway, to process service request, e.g. trigger service, received from a MTC server 130 for further trigger delivery. For the indirect trigger delivery, the interworking function can be an entry point of the service network 120 to the MTC server 130. The service network 120 may be a network in compliance with the GSM/GPRS/EDGE, WCDMA/HSPA, or LTE/LTE-Advanced technology. The access network 121 may be a GSM Edge Radio Access Network (GERAN) in the GSM technology, a UMTS Terrestrial Radio Access Network (UTRAN) in the WCDMA/HSPA technology, or an Evolved-UTRAN (E-UTRAN) in the LTE/LTE-Advanced technology, and the core network 122 may be a GSM core or General Packet Radio Service (GPRS) core in the GSM/UMTS system or an Evolved Packet Core (EPC) in the EPS system. For the case where the service network 120 is a UMTS network, the access network 121 may contain one or more base stations (or called NodeBs) and Radio Network Controllers (RNCs), and the core network 122 may contain a Home Location Register (HLR), at least one Serving GPRS Support Node (SGSN), and at least one Gateway GPRS Support Node (GGSN). For the case where the service network 120 is an EPS network, the access network 121 may contain one or more base stations (or called E-NodeBs), and the core networks 122 may contain a Home Subscriber Server (HSS), Mobility Management Entity (MME), Serving Gateway (S-GW), and Packet Data Network Gateway (PDN-GW or P-GW). The HLR or HSS is a central database that contains user-related and subscription-related information. The SGSN or MME/S-GW is the key control node for packet routing and transfer, mobility management (e.g., attach/detach and location management), session management, logical link management, authentication and charging functions, and etc. The S-GW provides the serving UE a direct user plane connectivity by being a bridge between the EUTRAN and P-GW, and it has a control plan interface to the MME for handling MT calls to reach the serving UE in idle mode. The GGSN or P-GW is responsible for inter-working between the UMTS or EPS network and external networks.

The MT 111 of the mobile communication device 110 may comprise a wireless module (not shown) for performing the functionality of wireless transmissions and receptions to and from the service network 120, and a controller module (not shown) for controlling the operation of the wireless module and other functional components, such as a display unit and/or keypad serving as the Man-Machine Interface (MMI), a storage unit storing the program codes of applications or communication protocols of the GSM/WCDMA/LTE/LTE-Advanced technology for the GSM/UMTS/EPS network (including PHY, MAC, RLC, RRC, NAS layers), and executing specific MTC application(s).

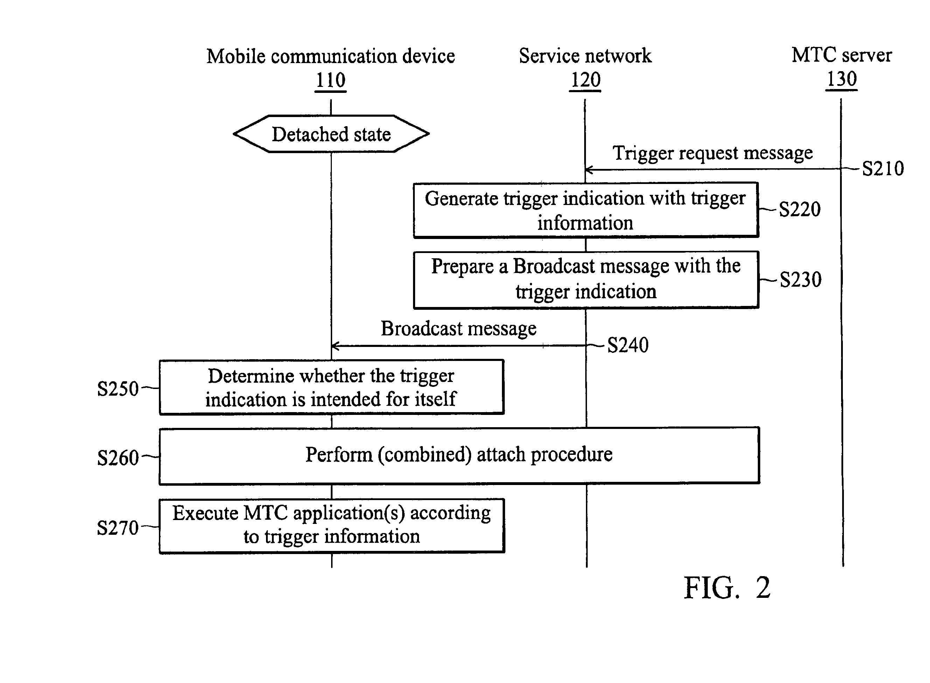

Fig. 2 is a message sequence chart illustrating the MTC device triggering via a trigger indication with trigger information according to an embodiment of the invention. As shown in Fig. 2, the mobile communication device 110 is initially in a detached state. When the MTC server 130 needs to trigger the mobile communication device 110 for executing specific MTC application(s), it transmits a trigger request message containing trigger information to the service network 120 (step S210). With the trigger information provided by the trigger request message, the service network 120 and the mobile communication device 110 may explicitly identify a triggering target and deliver the trigger request. When receiving the trigger request message, the service network 120, based on the trigger information, queries information required for delivering the trigger request to the target MTC device, e.g., the routing information and location information of the target MTC device, from the HSS. Based on the queried result, the service network 120 generates a trigger indication with specific trigger information received from the MTC server 130 (step S220). In addition, the trigger indication may comprise other information obtained from the HSS, e.g., the information concerning the serving nodes for routing the trigger request, the location information for identifying the triggering location of the target MTC device(s), etc. Specifically, the service network 120 may identify which MTC device to trigger (i.e., the target MTC device) according to the trigger request message received from the MTC server 130, and then generate a new message containing the trigger indication accordingly to forward the trigger request.

The trigger information from the MTC server 130 may comprise at least one of the following: 1) an identifier of the mobile communication device 110 to be triggered; 2) an identifier of a group of mobile communication devices to be triggered which the mobile communication device 110 belongs to; 3) an identifier of an area where the mobile communication device 110 to be triggered is located; 4) an identifier of an application to be triggered which may be on the mobile communication device 110 or on the MTC device 10 or 20; 5) one or more features of the mobile communication device 110, which identifies the required features of the mobile communication device 110 for triggering; and 6) a triggering time, which provides an absolute time to perform triggering task or to identify the validity of the trigger. According to the present invention, the trigger information from the MTC server 130 comprises at least one of the following: an identifier of an application to be triggered which may be on the mobile communication device 110 or on the MTC device 10 or 20; and one or more features of the mobile communication device 110, which identifies the required features of the mobile communication device 110 for triggering.

The identifier of the area contained in the trigger information may be determined according to a Cell Global Identification (CGI), a UMTS Terrestrial Radio Access Network (UTRAN) CGI, an Evolved UTRAN (E-UTRAN) CGI, a GSM Edge Radio Access Network (GERAN) CGI, a Service Area Identity (SAI), a Tracking Area Identity (TAI), a Routing Area Identity (RAI), a Location Area Identity (LAI), or any applicable triggering area identity. For example, when receiving the trigger indication, the mobile communication device 110 may identify its current location with the identifier of the area in the trigger indication. If the current location of the mobile communication device 110 is associated with an area identifier, e.g., TAI, which is the same as the triggering area, e.g., the same TAI, provided in the trigger indication, the mobile communication device 110 then identifies itself as the triggering target. If the trigger indication contains both of the identifier of the group and the identifier of the area while the mobile communication device 110 has the same identifier of the group but different identifier of the area, then the mobile communication device 110 cannot consider itself as the triggering target. Therefore, this can be a way to further limit the number of UEs to be triggered responding to the service network 120 that delivers trigger indication by broadcasting messages. Please note that the identifier of the area may be provided by the MTC server 130 and/or configured/converted by the service network 120 based on the trigger information containing the geographic information from the MTC server 130. For example, the MTC server 130 may include an area identity in the trigger information, wherein the area identity may be in the subscription of the UE, and based on the information of the serving network node of the UE, the service network 120 may convert the area identity to another area identity that is defined by service network 120. That is, the area identity provided by the MTC server 130 in the trigger information may be different from the area identity that is delivered by the service network 120, and the conversion of the area identity may be performed by the service network 120.

The features contained in the trigger information may indicate to trigger the MTC device(s) in low mobility, the MTC device(s) with small data transmission capability (e.g. limitation of data payload size), the MTC device(s) with remote triggering capability, the MTC device(s) in time controlled, or the MTC device(s) with Packet-Switched (PS) only capability, etc., or any combination of the above (all of which can be referred to 3GPP TR 23.888 or other related specifications with similar MTC techniques). Please note that there may have one or more features contained in the trigger information. For example, if the small data transmission feature is provided in the trigger indication, the service network 120 may base on the trigger indication to determine the best route for the delivery of the trigger request, wherein the best route means that the serving network node is capable of the same feature, i.e. small data transmission. Moreover, if the PS only feature is provided in the trigger indication, the service network 120 may base on the trigger indication to determine a delivery route which can provide PS only transmission. Further, if the mobile communication device 110 receives the trigger information containing the required feature, it checks if its capability is feasible for the required feature. The mobile communication device 110 identifies the trigger request as valid if it is capable of providing the required feature. For example, if the low mobility feature is contained in the trigger information, the mobile communication device 110 checks its velocity or distance between the configured location and current location, and if it is within the low mobility requirement, the mobile communication device 110 identifies itself as feasible for the low mobility feature.

The identifier of the mobile communication device 110 to be triggered is an identifier for the service network 120 to reach and locate the mobile communication device 110 served by the service network 120. Further, when the trigger indication is delivered to the mobile communication device 110 via the service network 120, the mobile communication device 110 may, based on the application identifier contained in the trigger information, continue to deliver the trigger information to the target application which may be on the mobile communication device 110 or on the MTC device 10 or 20 connected to the mobile communication device 110.

The triggering time contained in the trigger information may indicate a specific time for the mobile communication device 110 to be triggered, or indicate the mobile communication device 110 to be triggered at the reception of the trigger indication, or indicate a validity time for the trigger indication, i.e., a period of time or an absolute time where the trigger indication is considered valid. For example, the mobile communication device 110 receiving the trigger indication may not need to perform the triggering task immediately; instead, it may perform the triggering task as indicated at the triggering time, or after the reception of the trigger indication but respond to the MTC server 130 as indicated at the triggering time. For example, if the service network 120 detects that the validity time for the trigger indication has expired, it may cancel or ignore the trigger indication.

Next, the service network 120 prepares a specific message with the generated trigger indication according to the state of the mobile communication device 110 (step S230), and then transmits the specific message to the mobile communication device 110 (step S240). In this embodiment, since the mobile communication device 110 is in the detached state, a broadcast message is prepared to carry the trigger indication to the mobile communication device 110. The broadcast message may be transmitted in a System Information Block (SIB) or a Cell Broadcast Service (CBS) message as specified in the 3GPP TS 23.041 specification. According to the present invention, the broadcase message is transmitted in a SIB message. When receiving the broadcast message, the mobile communication device 110 retrieves the trigger indication and determines whether the trigger indication is intended for itself (step S250). Specifically, the determination may be performed based on the trigger information in the trigger indication. For example, the trigger indication may be determined to be intended for the mobile communication device 110, if the trigger information comprises the identifier of the mobile communication device 110, or if the trigger information comprises the identifier of the group which the mobile communication device 110 belongs to, or if the trigger information comprises the identifier of the application which is the service to be triggered by the MTC server 130 and/or the service that the mobile communication device 110 subscribes to, or if the trigger information comprises the identifier of the area where the mobile communication device 110 is located, or if the trigger information indicates at least one feature of the mobile communication device 110.

Subsequent to step S250, if the trigger indication is intended for itself, the mobile communication device 110 may forward the trigger information contained therein to the intended MTC application which may run on the mobile communication device 110 configured for MTC or on the MTC device 10 or 20 according to the application identifier contained in the trigger information. Also, the mobile communication device 110 performs an attach procedure or combined attach procedure to attach to the service network 120 (step S260). If a specific Packet Data Protocol (PDP) context or Packet Data Network (PDN) connection is needed for such triggering MTC application, the mobile communication device 110 may also establish an appropriate PDP context or PDN connection which may be associated to a specific APN for the triggering service with the service network 120, where the mapping between the application identifier and the associated APN information may be configured and stored in the mobile communication device 110 or sent with the trigger indication; otherwise the mobile communication device 110 may perform a PDP context activation procedure or PDN connection setup procedure to establish a default PDP context or PDN connection. Detailed descriptions of the attach procedure, the combined attach procedure, the PDP context activation procedure, and the PDN connection setup procedure are omitted herein since they are beyond the scope of the invention, and references may be made to the 3GPP TS 24.301 and TS 24.008 specifications.

After step S260, the mobile communication device 110 executes the MTC application(s) according to the trigger information in the trigger indication (step S270). For example, the mobile communication device 110 may execute the MTC application(s) in the way as indicated in the trigger information.

In one embodiment, if the mobile communication device 110 is subscribed to only one MTC application, the trigger information may not comprise information concerning the MTC application to be executed for the MTC device triggering, or otherwise, if the mobile communication device 110 is subscribed to more than one MTC application, the trigger information may comprise information concerning the MTC application to be executed for the MTC device triggering, such as the application identifier as described above.

In another embodiment, if the trigger information does not comprise a specific triggering time, the triggering MTC application may execute a specific service immediately according to the triggering information and may respond to the MTC server 130 after completion of the triggering task; or the mobile communication device 110 may immediately execute the only one MTC application which it is subscribed to and may respond to the MTC server 130 after completion of the triggering task. Otherwise, if the trigger information comprises a specific triggering time, the mobile communication device 110 may execute the MTC application at the time specified by the triggering time and may respond to the MTC server 130 after completion of the triggering task.

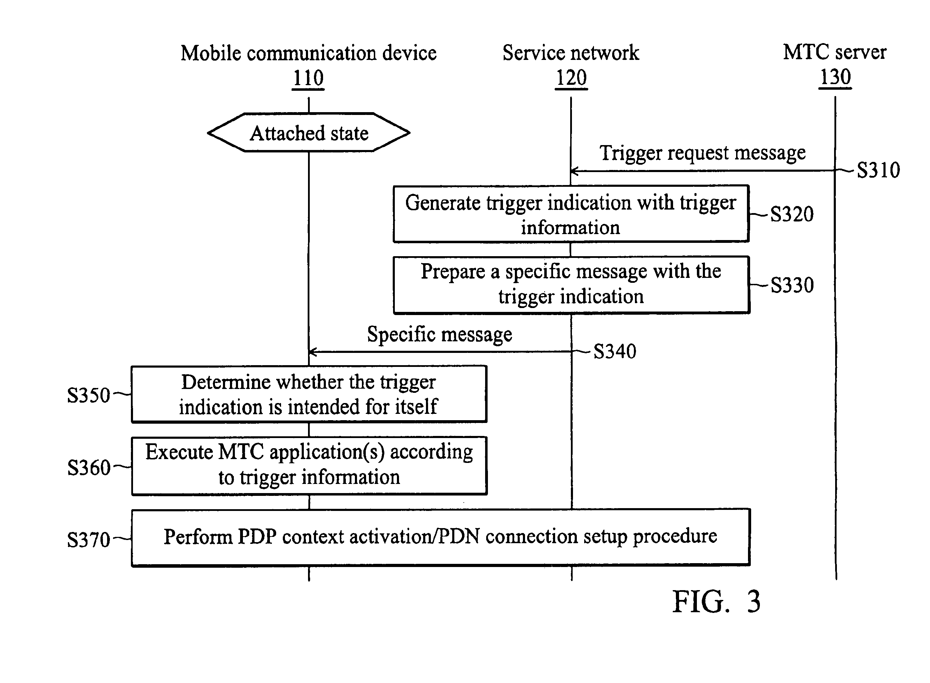

Fig. 3 is a message sequence chart illustrating the MTC device triggering via a trigger indication with trigger information according to another embodiment of the invention. As shown in Fig. 3, the mobile communication device 110 is initially in an attached state and with or without any PDP context or PDN connection. Note that, in Fig.3, steps S310 and S320 are similar to steps S210 and S220 of Fig.2 respectively, and are not described in detail again here. Also, the trigger information included in the trigger request message sent from the MTC server 130 in step S310 is similar to the trigger information described with respect to the embodiment of Fig.2, and is not described in detail again here.

Next, the service network 120 prepares a specific message with the generated trigger indication according to the state of the mobile communication device 110 (step S330), and then transmits the specific message to the mobile communication device 110 (step S340). In this embodiment, since the mobile communication device 110 is in the attached state and may be in the idle mode, a paging message may be prepared to carry the trigger indication to the mobile communication device 110, or to invoke the mobile communication device 110 to receive the trigger indication via a Non-Access Stratum (NAS) signaling message, e.g. DOWNLINK NAS TRANSPORT message or DOWNLINK GENERIC NAS TRANSPORT message, or an EMM INFORMATION message after the mobile communication device 110 is invoked and responds to the core network 122, or a new specific NAS message for trigger delivery service or other MTC services, e.g. small data transmission, MTC monitoring, etc. Note that the trigger indication may be included in the NAS message container IE of the DOWNLINK NAS TRANSPORT message, or in the Generic message container and/or Additional information IE of the DOWNLINK GENERIC NAS TRANSPORT message, or in a new IE of the above messages or the EMM INFORMATION message. When receiving the specific message (i.e., the paging message, NAS signaling message, or EMM INFORMATION message) carrying the trigger indication from the service network 120, the mobile communication device 110 retrieves the trigger indication and determines whether the trigger indication is intended for itself (step S350). Specifically, the determination may be performed based on the trigger information included in the trigger indication. Examples of this determination process are similar to those described with respect to step S250 of Fig.2, and are not described again here.

Subsequent to step S350, if the trigger indication is intended for itself, the mobile communication device 110 may forward the trigger information contained therein to the intended MTC application which may run on mobile communication device 110 itself or on the MTC device 10 or 20 according to the application identifier contained in the trigger information. That is, the mobile communication device 110 executes the MTC application(s) according to the trigger information in the trigger indication (step S360). After that, if the existing PDP context or PDN connection is not appropriate for the MTC application(s) to be triggered, or if a specific PDP context or PDN connection is needed for such MTC application, MTC application may indicate the mobile communication device 110 to perform a PDP context activation procedure or PDN connection setup procedure by establishing an appropriate PDP context or PDN connection which may be associated to a specific APN for the triggering service with the service network 120 (step S370), where the mapping between the application identifier and the associated APN information may be configured and stored on the mobile communication device 110; otherwise the mobile communication device 110 may perform a PDP context activation procedure or PDN connection setup procedure to establish a default PDP context or PDN connection.

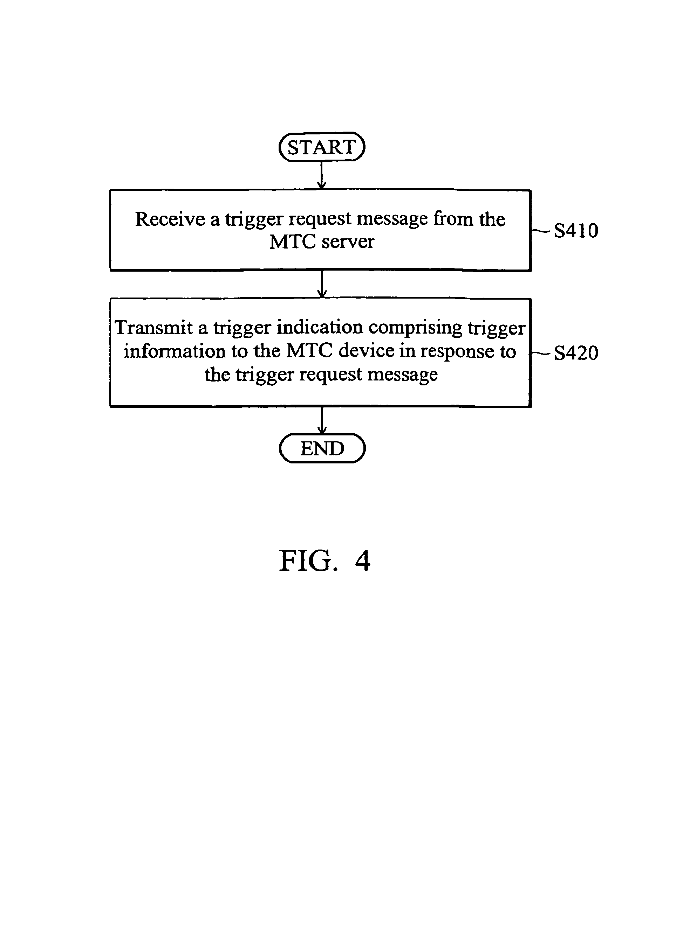

Fig. 4 is a flow chart illustrating the method for handling MTC device triggering according to an embodiment of the invention. The method for handling MTC device triggering may be applied to any service network, such as the service network 120 in Fig. 1, which is capable of enabling machine type communication between an MTC server and at least one MTC device. To begin, the service network receives a trigger request message from the MTC server (step S410). In one embodiment, the trigger request message may be transmitted in response to the MTC server receiving a triggering request from a connected MTC application server.

Next, the service network transmits a trigger indication comprising trigger information to the MTC device in response to the trigger request message (step S420). Here, the trigger information comprised in the trigger indication is similar to the trigger information described with respect to the embodiment of Fig.2, and is not described in detail again here.

Note that, unlike the conventional design of the service network in compliance with the TR 23.888 and TS 24.368 specifications, the service network of the invention, based on the trigger information received from the MTC server 130, prepares specific trigger information to be carried in the trigger indication, formats a trigger submission message containing the trigger indication, and delivers the trigger submission message to the MTC device, so that the MTC application on the MTC device may be triggered successfully and properly.

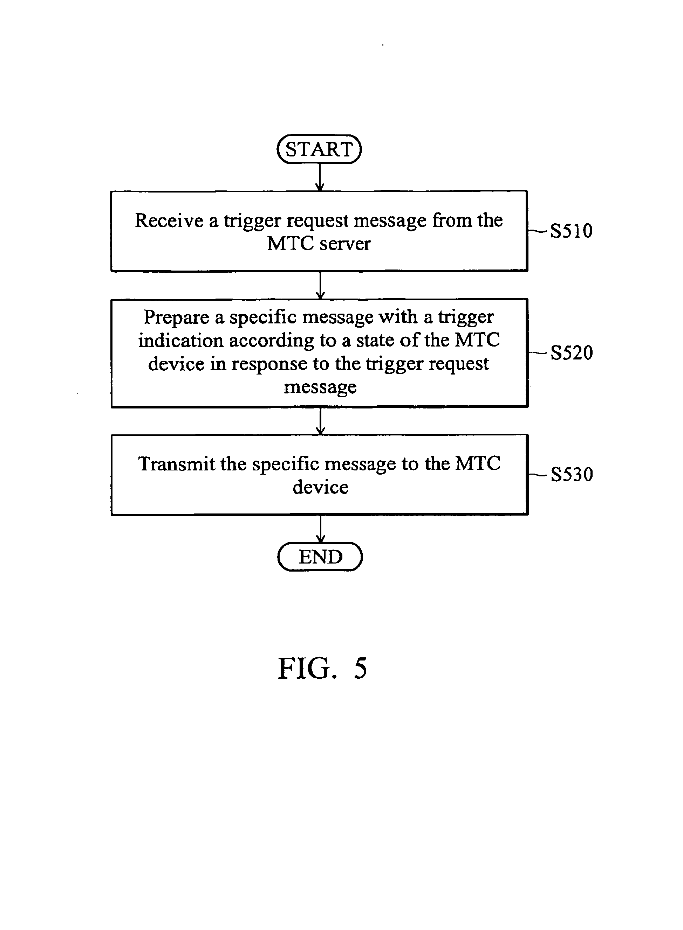

Fig. 5 is a flow chart illustrating the method for handling MTC device triggering according to another embodiment of the invention. The method for handling MTC device triggering may be applied to any service network, such as the service network 120 in Fig. 1, which is capable of enabling machine type communication between an MTC server and at least one MTC device. To begin, the service network receives a trigger request message from the MTC server (step S510).

Next, the service network prepares a specific message with a trigger indication according to a state of the MTC device in response to the trigger request message from the MTC server (step S520), and then transmits the specific message to the MTC device (step S530). In a first embodiment, the specific message for trigger submission is a broadcast message if the MTC device to be triggered is in the detached state, wherein the broadcast message is a SIB message. In a second embodiment, the specific message for trigger submission may be a paging message or an existing NAS message or a new NAS message or an EMM INFORMATION message with new information element carrying trigger indication, if the MTC device to be triggered is in the attached state without any PDP context or PDN connection. In a third embodiment, the specific message for trigger submission may be an existing NAS message or a new NAS message or an EMM INFORMATION message with new information element carrying trigger indication, if the MTC device to be triggered is in the attached state with at least one PDP context or PDN connection appropriate for the MTC application to be triggered on the MTC device. Note that, unlike the conventional design of the service network in compliance with the TR 23.888 and TS 24.368 specifications, the service network of the invention proposes specific ways of delivery of the trigger indication, so that the MTC device may be triggered successfully.

While the invention has been described by way of example and in terms of preferred embodiment, it is to be understood that the invention is not limited thereto. Those who are skilled in this technology can still make various alterations and modifications without departing from the scope of this invention. For example, the method for handling MTC device triggering may also be applied for service networks in compliance with any evolutionary technology of the LTE/LTE-Advanced technology. Therefore, the scope of the present invention shall be defined by the following claims.

## Claims

1. A method for handling Machine Type Communication, MTC, device triggering by a service network (120) connected to an MTC server (130) and at least one MTC device (10, 20), comprising:
receiving (S210, S410) a trigger request message from the MTC server (130); and
transmitting (S240, S420) a trigger indication comprising trigger information to the MTC device (10, 20) in response to the trigger request message;
**characterized in that** the trigger information comprises at least one of the following:
an identifier of an application to be triggered by the MTC device (10, 20); and one or more features of the MTC device (10, 20);
wherein each of the features indicates to trigger the MTC device (10, 20) in low mobility, the MTC device (10, 20) with small data transmission capability, the MTC device (10, 20) with remote triggering capability, the MTC device (10, 20) in time controlled, or the MTC device (10, 20) with packet-switched only capability.

2. The method of claim 1, wherein the trigger information further comprises an identifier of an area where the MTC device (10, 20) is located, and wherein the identifier of the area is determined according to a Cell Global Identification, CGI, a UMTS Terrestrial Radio Access Network, UTRAN, CGI, an Evolved UTRAN, E-UTRAN, CGI, a GSM Edge Radio Access Network, GERAN, CGI, a Service Area Identity, SAI, a Tracking Area Identity, TAI, a Routing Area Identity, RAI, a Location Area Identity, LAI, or a triggering area identity.

3. The method of claim 1, wherein the trigger information further comprises a triggering time, and wherein the triggering time indicates a specific time for the MTC device (10, 20) to be triggered, or indicates the MTC device (10, 20) to be triggered at the reception of the trigger indication, or indicates a validity time for the trigger indication.

4. The method of claim 1, wherein the transmitting step comprises:
preparing (S330, S520) a specific message with the trigger indication in response to the trigger request message; and
transmitting (S340, S530) the specific message to the MTC device (10, 20).

5. The method of claim 4, further comprising:
preparing a paging message to invoke the MTC device (10, 20) to receive the specific message;
wherein the specific message is a NAS signaling message.

6. The method of claim 4, wherein the NAS signaling message is a DOWNLINK NAS TRANSPORT message, a DOWNLINK GENERIC NAS TRANSPORT message or an EMM INFORMATION message.

## Patentansprüche

1. Ein Verfahren zum Behandeln von Maschinentypkommunikationsgerätauslösung, auch MTC Gerätauslösung, MTC = Machine Type Communication, die durch ein Dienstnetzwerk (120) ausgelöst wird, das mit einen MTC Server (130) und mit mindestens einem MTC Gerät (10, 20) verbunden ist, wobei das Verfahren Folgendes aufweist:
Empfangen (S210, S410) einer Auslöseanforderungsnachricht von dem MTC Server (130); und
Senden (S240, S420) einer Auslöseanzeige, die Auslöseinformation enthält, an das MTC Gerät (10, 20) ansprechend auf die Auslöseanforderungsnachricht;
**dadurch gekennzeichnet, dass** die Auslöseinformation mindestens eines der Folgenden aufweist:
einen Kennzeichner einer Anwendung, die durch das MTC Gerät (10, 20) ausgelöst werden soll; und ein oder mehrere Eigenschaften des MTC Geräts (10, 20);
wobei jede der Eigenschaften Auslösen eines der Folgenden anzeigt: des MTC Geräts (10, 20) mit geringer Mobilität, des MTC Geräts (10, 20) mit geringer Datenübertragungsfähigkeit, des MTC Geräts (10, 20) mit entfernter Auslösefähigkeit, des MTC Geräts (10, 20) zeitgesteuert, oder des MTC Geräts (10, 20) nur mit Paketvermittlungsfähigkeit.

2. Verfahren nach Anspruch 1, wobei die Auslöseinformation ferner einen Kennzeichner eines Gebiets aufweist, wo sich das MTC Gerät (10, 20) befindet, und wobei der Kennzeichner des Gebietes gemäß einem der Folgenden bestimmt wird: einer Globalen Zellenidentifikation, CGI = Global Cell Identification, einer UMTS Landfunkzugriffsnetzwerk CGI, auch UTRAN CGI, UTRAN = UMTS Terrestrial Radio Access Network, einer Evolved UTRAN CGI, auch E-UTRAN CGI, einer GSM Edge Funkzugriffsnetzwerk CGI, auch GERAN CGI, GERAN = GSM Edge Radio Access Network, einer Dienstgebietsidendität, auch SAI = Service Area Identity, einer Verfolgungsgebietsidendität, auch TAI = Tracking Area Idendity, einer Routinggebietsidendität, auch RAI = Routing Area Idendity, einer Ortsgebietsidendität, auch LAI = Location Area Idendity oder einer Auslösegebietsidendität, auch Triggering Area Idendity.

3. Verfahren nach Anspruch 1, wobei die Auslöseinformation ferner eine Auslösezeit aufweist, und wobei die Auslösezeit eine spezifische Zeit für das MTC Gerät (10, 20) zum Auslösen anzeigt, oder dem MTC Gerät (10, 20) anzeigt, bei dem Empfang der Auslöseanzeige ausgelöst zu werden, oder eine Gültigkeitszeit für die Auslöseanzeige anzeigt.

4. Verfahren nach Anspruch 1, wobei der Sendeschritt Folgendes aufweist:
Vorbereiten (S330, S520) einer spezifischen Nachricht mit der Auslöseinformation ansprechend auf die Auslöseanforderungsnachricht; und
Senden (S340, S530) der spezifischen Nachricht an das MTC Gerät (10, 20).

5. Verfahren nach Anspruch 4, das ferner Folgendes aufweist:
Vorbereiten einer Funkrufnachricht, auch Paging Nachricht, um das MTC Gerät (10, 20) zu aktivieren, die spezifische Nachricht zu empfangen,
wobei die spezifische Nachricht eine NAS Signalisierungsnachricht ist.

6. Verfahren nach Anspruch 4, wobei die NAS Signalisierungsnachricht eine DOWNLINK NAS TRANSPORT Nachricht, eine DOWNLINK GENERIC NAS TRANSPORT Nachricht oder eine EMM INFORMATION Nachricht ist.

## Revendications

1. Procédé pour gérer le déclenchement d'un Dispositif de Communication de Type Machine, MTC, par un réseau de service (120) connecté à un serveur MTC (130) et à au moins un dispositif MTC (10, 20), comprenant :
recevoir (S210, S410) un message de requête de déclenchement provenant du serveur MTC (130) ; et
émettre (S240, S420) une indication de déclenchement comprenant des informations de déclenchement vers le dispositif MTC (10, 20) en réponse au message de requête de déclenchement ;
**caractérisé en ce que** les informations de déclenchement comprennent au moins l'un des éléments suivants :
un identificateur d'une application à déclencher par le dispositif MTC (10, 20) ; et
une ou plusieurs caractéristiques du dispositif MTC (10, 20) ;
dans lequel chacune des caractéristiques indique qu'il faut déclencher le dispositif MTC (10, 20) en faible mobilité, le dispositif MTC (10, 20) avec une faible capacité de transmission de données, le dispositif MTC (10, 20) avec une capacité de déclenchement à distance, le dispositif MTC (10, 20) en temps contrôlé, ou le dispositif MTC (10, 20) avec seulement une capacité de paquets commutés.

2. Procédé selon la revendication 1, dans lequel les informations de déclenchement comprennent en outre un identificateur d'une région dans laquelle est situé le dispositif MTC (10, 20), et dans lequel l'identificateur de la région est déterminé conformément à une Identification Globale de Cellule, CGI, une CGI de Réseau d'Accès Radio Terrestre UMTS, UTRAN, une CGI de UTRAN évolué, E-UTRAN, une CGI de Réseau d'Accès Radio Edge GSM, GERAN, une Identité de Région de Service, SAI, une Identité de Région de Suivi, TAI, une Identité de Région de Routage, RAI, une Identité de Région de Localisation, LAI, ou une identité de région de déclenchement.

3. Procédé selon la revendication 1, dans lequel les informations de déclenchement comprennent en outre un instant de déclenchement, et dans lequel l'instant de déclenchement indique un instant spécifique pour le dispositif MTC (10, 20) à déclencher, ou indique au dispositif MTC (10, 20) de déclencher à la réception de l'indication de déclenchement, ou indique un temps de validité pour l'indication de déclenchement.

4. Procédé selon la revendication 1, dans lequel l'étape d'émission comprend :
préparer (S330, S520) un message spécifique avec l'indication de déclenchement en réponse au message de requête de déclenchement ; et
émettre (S340, S530) le message spécifique vers le dispositif MTC (10, 20).

5. Procédé selon la revendication 4, comprenant en outre :
préparer un message de téléavertissement pour invoquer le dispositif MTC (10, 20) pour recevoir le message spécifique ;
dans lequel le message spécifique est un message de signalisation NAS.

6. Procédé selon la revendication 4, dans lequel le message de signalisation NAS est un message TRANSPORT NAS DE LIAISON DESCENDANTE, un message TRANSPORT NAS GÉNÉRIQUE DE LIAISON DESCENDANTE, ou un message d'INFORMATION EMM.
